# EUROPEAN PATENT APPLICATION

(11) **EP 4 475 098 A1**
(43) Date of publication of application: **11.12.2024**
(21) Application number: 24180477.2
(22) Date of filing: 06.06.2024
(51) Int. Cl.: G07F 9/02, G07C 9/00, G07F 17/12, A47G 29/14, H04W 80/00

(54) **AUTOMATED PARCEL MACHINE DEVICES AND SYSTEMS**

(30) Priority: 09.06.2023 US 202363507270 P
(71) Applicant: Cleveron AS, 71020 Viljandi (EE)
(72) Inventor: JOOST, Laur, 71020 Viljandi (EE); VAINKÜLA, Sven, 71020 Viljandi (EE); KURG, Rait, 71020 Viljandi (EE)
(74) Representative: Berggren Oy

(57) **Abstract**

A device (100, 300, 101) may include a body comprising a plurality of parcel insertion slots. A device may include a device board (500) for controlling operations of the device, the device board comprising a controller (502, 700) comprising: at least one processor, at least one memory operably coupled to the at least one processor, a low-power wide-area module configured for communication with a server over a first communication link, and a low-power personal-area module configured for communication with a second automated parcel machine (APM) module over a second communication link.

## Description

### FIELD OF INVENTION

This invention relates to an automated parcel machine, particularly a battery-powered machine for delivery of online orders.

### BACKGROUND

Automated parcel machines, also known as automated parcel lockers or smart lockers, are self-service kiosks or storage units that allow individuals to send, receive, and return packages conveniently. These machines are typically placed in easily accessible locations such as shopping centers, residential complexes, office buildings, and transportation hubs.

### SUMMARY

An automated parcel machine (APM) module includes a body including a plurality of parcel insertion slots and a device board for controlling operations of the APM module. The device board includes a controller having a low-power wide-area module and a low-power personal area module. The low-power wide-area module is configured for communication with a server over a first communication link, and the low-power personal-area module configured for communication with a second APM module over a second communication link.

In some aspects, an automated parcel machine (APM) module includes: a body including a plurality of parcel insertion slots; and a device board for controlling operations of the APM module. The device board includes a controller including at least one processor, at least one memory operably coupled to the at least one processor, a low-power wide-area module configured for communication with a server over a first communication link, and a low-power personal-area module configured for communication with a second APM module over a second communication link.

In some aspects, the first communication link includes a cellular network.

In some aspects, the controller is configured to communicate with the server over the first communication link using a narrowband internet of things (NB-IoT) protocol or Long Term Evolution Machine Type Communication (LTE-M) standard.

In some aspects, the second communication link is a Bluetooth low-energy (BLE) link.

In some aspects, the controller is configured to establish a connection to the server over the first communication link.

In some aspects, the controller is configured to transmit a status synchronization signal to the server over the first communication link.

In some aspects, the controller is configured to establish a connection to the second APM module or a mobile courier application over the second communication link.

In some aspects, the device board further includes at least one battery.

In some aspects, the device board further includes a plurality of batteries.

In some aspects, the APM module further includes an antenna operably coupled to the low-power wide-area module.

In some aspects, the APM module further includes a PIN pad.

In some aspects, the APM module further includes a thin-film-transistor (TFT) LCD display.

In some aspects, a system includes: a first APM module; and a second APM module. The first APM module includes: a first body including a first plurality of parcel insertion slots, and a first device board for controlling operations of the first APM module, the first device board including a first controller including: at least one first processor; at least one first memory operably coupled to the at least one first processor; a low-power wide-area module configured for communication with a server over a first communication link; and a first low-power personal-area module configured for communication with the second APM module over a second communication link. The second APM module includes: a second body including a second plurality of parcel insertion slots, and a second device board for controlling operations of the second APM module, the second device board including a second controller including: at least one second processor; at least one second memory operably coupled to the at least one second processor; and a second low-power personal-area module configured for communication with the first APM module over the second communication link.

In some aspects, the first communication link includes a cellular network.

In some aspects, the second communication link is a Bluetooth low-energy (BLE) link.

In some aspects, the first APM module further includes an antenna operably coupled to the low-power wide-area module.

In some aspects, the system further includes a third APM module including: a third body including a third plurality of parcel insertion slots, and a third device board for controlling operations of the third APM module, the third device board including a third controller including: at least one third processor; at least one third memory operably coupled to the at least one third processor; and a third low-power personal-area module configured for communication with the first APM module over the second communication link. It is to be understood that the system is not limited to three APM modules but may include further APM modules with similar logic.

It should be understood that the above-described subject matter may also be implemented as a computer-controlled apparatus, a computer process, a computing system, or an article of manufacture, such as a computer-readable storage medium.

Other systems, methods, features and/or advantages will be or may become apparent to one with skill in the art upon examination of the following drawings and detailed description. It is intended that all such additional systems, methods, features and/or advantages be included within this description and be protected by the accompanying claims.

### BRIEF DESCRIPTION OF THE DRAWINGS

The components in the drawings are not necessarily to scale relative to each other. Like reference numerals designate corresponding parts throughout the several views.
Fig 1 illustrates a V1 automated parcel machine (APM) according to an implementation described herein. The APM includes a V1 main module with PIN pad door and an extra module.
Fig. 2 illustrates an example human-to-V1 APM communication interface according to an implementation described herein.
Fig. 3 illustrates a V2 APM according to an implementation described herein. The APM includes a V2 main module with PIN pad + TFT LCD display door and an extra module.
Fig. 4 illustrates an example human-to-V2 APM communication interface according to an implementation described herein.
Fig. 5 illustrates a V1 main module of the APM and its device board according to an implementation described herein.
Fig. 6 illustrates a V2 main module of the APM and its device board according to an implementation described herein.
Fig. 7 illustrates an extra module of the APM and its device board according to an implementation described herein.
Fig. 8 illustrates example parcel insertion operations according to an implementation described herein.
Fig. 9 illustrates example parcel retrieval operations using a cellular network according to an implementation described herein.
Fig. 10 illustrates example parcel retrieval operations using a courier application according to an implementation described herein.
Fig. 11 is an example computing device.
Fig.12 illustrates an example of parcel insertion over mobile network.

### DETAILED DESCRIPTION

Unless defined otherwise, all technical and scientific terms used herein have the same meaning as commonly understood by one of ordinary skill in the art. Methods and materials similar or equivalent to those described herein can be used in the practice or testing of the present disclosure. As used in the specification, and in the appended claims, the singular forms "a," "an," "the" include plural referents unless the context clearly dictates otherwise. The term "comprising", and variations thereof as used herein is used synonymously with the term "including" and variations thereof and are open, non-limiting terms. The terms "optional" or "optionally" used herein mean that the subsequently described feature, event or circumstance may or may not occur, and that the description includes instances where said feature, event or circumstance occurs and instances where it does not. Ranges may be expressed herein as from "about" one particular value, and/or to "about" another particular value. When such a range is expressed, an aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint. As used herein, the terms "about" or "approximately" when referring to a measurable value such as an amount, a percentage, and the like, is meant to encompass variations of ±20%, ±10%, ±5%, or ±1% from the measurable value.

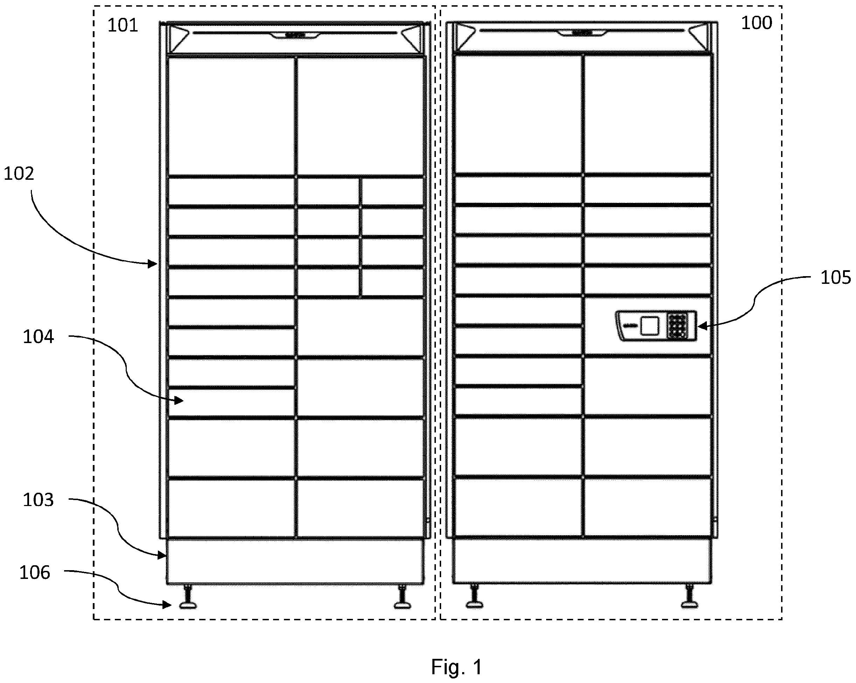

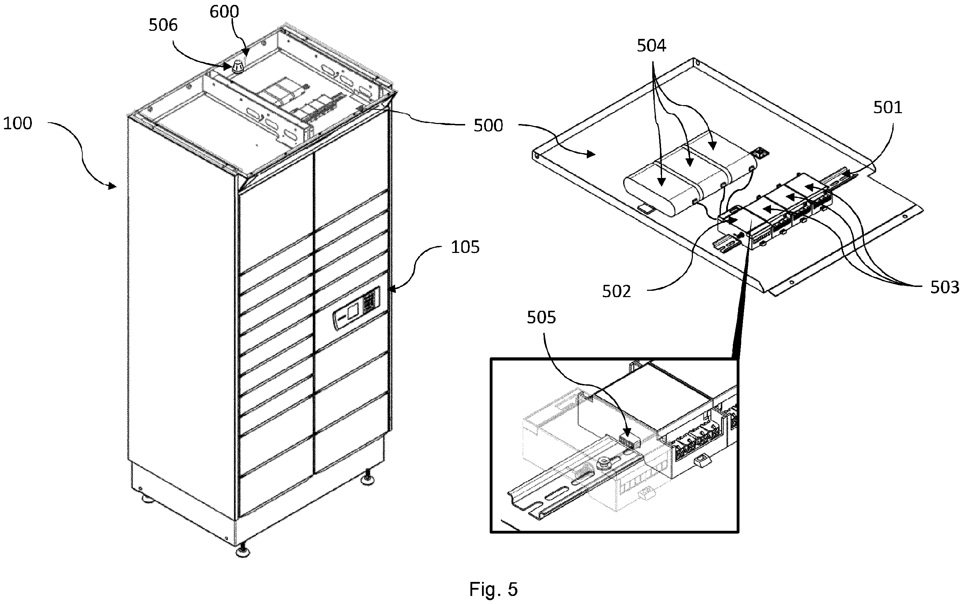

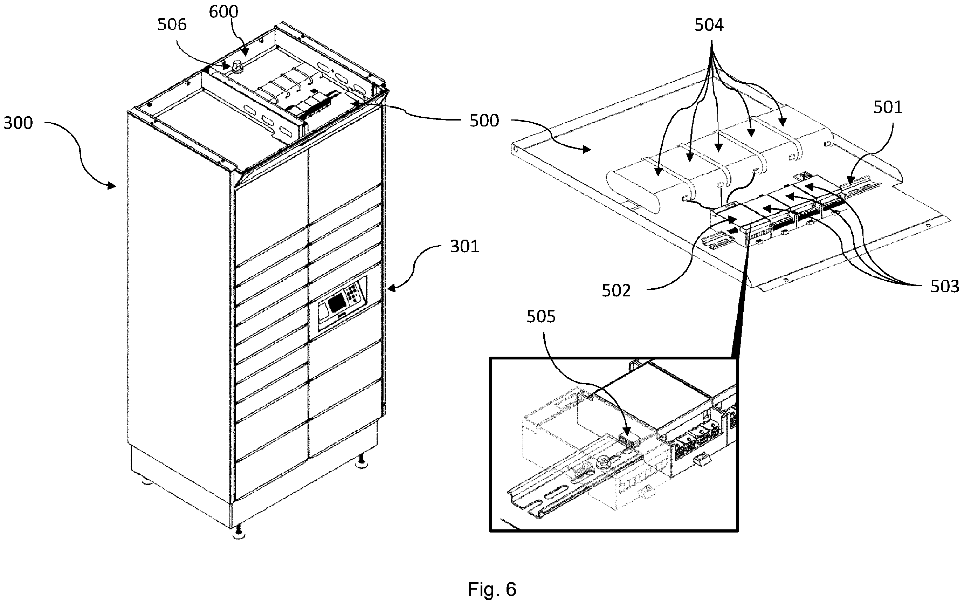

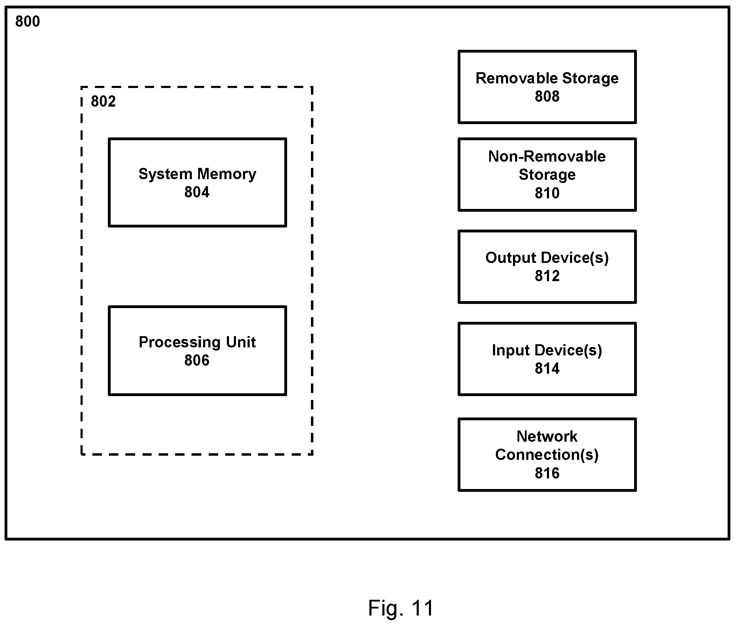

In some aspects, an automated parcel machine (APM module) includes: a body (e.g., locker body 102 in Fig. 1) including a plurality of parcel insertion slots; and a device board 500 (e.g., device board 500 in Figs. 5 and 6) for controlling operations of the APM module. The device board includes a controller (e.g., APM MC 502 in Figs. 5 and 6.) including: at least one processor and at least one memory operably coupled to at least one processor (e.g., basic computing configuration of box 802 in Fig. 11).

Additionally, the controller (e.g., APM main controller (MC) 502) includes a low-power wide-area module configured for communication with a server over a first communication link. Optionally, the first communication link comprises a cellular network. A low-power wide-area (LPWAN) is a type of wireless communication network designed to provide long-range connectivity for Internet of Things (IoT) devices while consuming minimal power. LPWANs are specifically optimized for devices that require low data rates, long battery life, and extended coverage areas. An example technology for LPWAN communications is the narrowband IoT (NB-IoT) or Long Term Evolution Machine Type Communication (LTE-M) standard. It should be understood thatNB-IoT protocol and LTE-M standard are provided only as an example. This disclosure contemplates using other standards or protocols for LPWAN communications.

Further, the controller (e.g., APM MC 502) includes a low-power personal-area module configured for communication with a second APM module (e.g., extra module 101 in Fig. 1) over a second communication link. Optionally, the second communication link is a Bluetooth low-energy (BLE) link. Wireless Personal Area Network (WPAN) is a type of wireless network that enable communication between devices in close proximity to each other, typically within a range of a few meters (e.g. maximally within 10 meters, preferably within 2-5 meters). WPANs are designed to support low-power and short-range communication between devices and are often used for applications like wearable devices, health monitoring systems, home automation, and wireless peripheral connections. An example communication standard for WPAN is BLE. It should be understood that BLE is provided only as an example. This disclosure contemplates using other standards or protocols for WPAN communications.

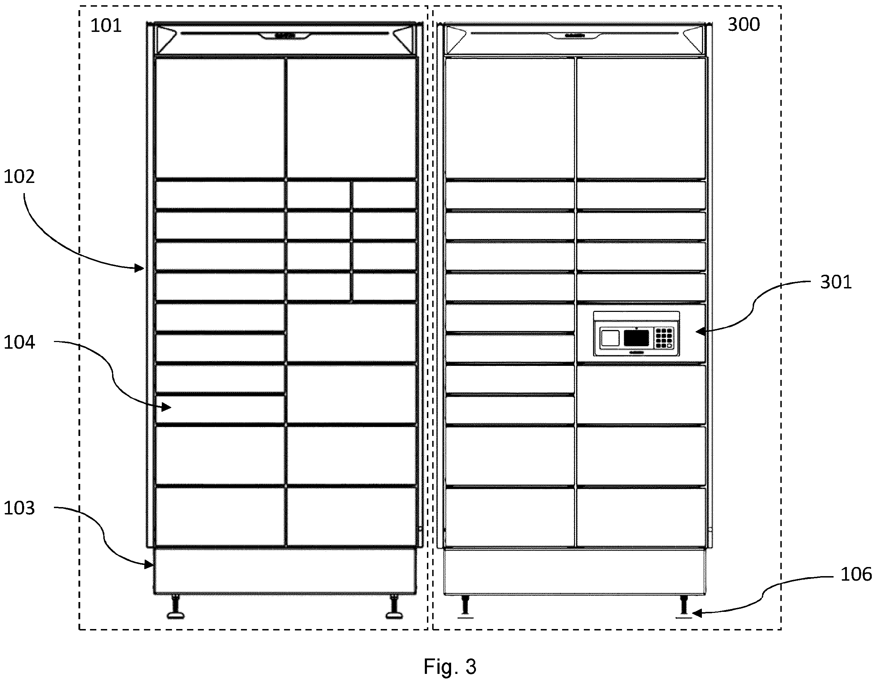

According to this disclosure, the APM module such as main module 100 (PIN pad only main module shown in Fig. 1) or main module 300 (PIN pad and display main module shown in Fig. 3) can communicate with one or more additional APM modules such as extra module 101 (e.g., using the second communication link) while simultaneously communicating with the server (e.g., using the first communication link). For example, a second APM module (e.g., extra module 101) can communicate slot status information (e.g., filled, empty, disabled, opened, etc.) to a first APM module (e.g., main module 100 or 300) using a BLE link, and the first APM module (e.g., main module 100 or 300) can synchronize slot status information with a server using a cellular network. In particular, the low-power personal-area module (e.g., BLE link) is used to connect the APM MC 502 inside the main module 100 or 300 to APM sub-controller (SC) 700 inside the extra module 101. In addition, the low-power personal-area module (e.g., BLE link) is used to establish a connection between the APM MC 502 inside the main module 100 or 300 and a mobile courier application. An advantage of this configuration, which uses multiple information/communication channels, is the ability to update a package registry almost immediately. Existing technologies do not have multiple information/communication channels and therefore the registry can be updated only after some time has passed from a package inserted to or received from the machine. According to existing technologies, an automated parcel machine can only send information to a server to update the registry essentially immediately only when a user connects a mobile device to the APM, i.e., the user's app acts as a link between the server and automated parcel machine. In contrast, the APM (e.g., main module 100 or 300) of the present disclosure includes both a low-power wide-area module *and* a low-power personal-area module to address deficiencies of existing technologies.

In some aspects, a system includes: a first APM module (e.g., main module 100 or 300) and a second APM module (e.g., extra module 101). The first APM module (e.g., main module 100 or 300) includes: a first body including a first plurality of parcel insertion slots, and a first device board (e.g., device board 500) for controlling operations of the first APM module, the first device board including a first controller (e.g., APM MC 502) including: at least one first processor; at least one first memory operably coupled to the at least one first processor; a low-power wide-area module configured for communication with a server over a first communication link; and a first low-power personal-area module configured for communication with the second APM module (e.g., extra module 101) over a second communication link. Additionally, as described herein, the first low-power personal-area module may be configured to establish the connection between the first APM module (e.g., via APM MC 502) and the mobile courier application. The second APM module (e.g., extra module 101) includes: a second body including a second plurality of parcel insertion slots, and a second device (e.g., APM SC 700) board for controlling operations of the second APM module, the second device board including a second controller including: at least one second processor; at least one second memory operably coupled to the at least one second processor; and a second low-power personal-area module configured for communication with the first APM module (e.g., main module 100 or 300) over the second communication link.

Optionally, the system includes more than two automated parcel machines. For example, the system may include a third APM module. A third APM module includes: a third body including a third plurality of parcel insertion slots, and a third device board for controlling operations of the third APM module, the third device board including a third controller including: at least one third processor; at least one third memory operably coupled to the at least one third processor; and a third low-power personal-area module configured for communication with the first APM module over the second communication link.

Optionally, the system may include a fourth APM module. This disclosure contemplates that the fourth APM module includes: a fourth body including a fourth plurality of parcel insertion slots, and a fourth device board for controlling operations of the fourth APM module, the fourth device board including a fourth controller including: at least one fourth processor; at least one fourth memory operably coupled to the at least one fourth processor; and a fourth low-power personal-area module configured for communication with the first APM module over the second communication link. Again, it is to be understood that the system is not limited to four APM modules but may include further APM modules with similar logic.

In some implementations, the automated parcel machine (APM) can include one main module 100 or 300 and a plurality of extra modules 101. Optionally, the APM can include one main module 100 or 300 and two extra modules 101. Optionally, the APM can include one main module 100 or 300 and three extra modules 101. Although APMs having two and three extra modules 101 are provided as examples, this disclosure contemplates providing an APM with one extra module 101 or more than three extra modules 101, e.g., four, five, etc. extra modules 101. It should also be understood that the APM can include solely one main module 100 or 300 as described herein (i.e., with no extra modules 101).

Referring now to Fig. 1 and Fig. 3, an automated parcel machine (APM) is shown. The APM shown in Fig. 1 and Fig. 3 is a battery powered APM for handover of online orders. Optionally, the APM is designed for location in an outdoor environment. The APM according to this invention is subdivided into two types of units:
- Main module 100 or 300 acting as the APM control unit.
- Extra module 101 being the supplementary unit to the main module with the purpose of increasing the number of parcel slots.

The main module comprises an outer shell, device board, and user interface. The extra module includes an outer shell and device board.

### Detailed view of the components

### Outer shell

Still referring to Fig. 1 and Fig. 3, the outer shell of the APM is preferably composed of sheet metal having a thickness of 0. 5- 2mm, preferably 0.8-1.5 and most preferably 0.8... 1.2 mm. Materials other than sheet metal may be used. This acts as the locker body 102 structure assembled on top of a base frame 103, the base frame preferably being sheet metal with thickness between 2-4mm preferably 3mm supported by leveling feet 106. For APM stability the base frame is filled with concrete blocks or other stabilizing heavy material. In front of both the main module 100 and the extra module 101, are situated parcel insertion slots covered with doors 104. Each door is preferably made of double-layered 0.8 mm sheet metal and is latched by using a motor lock. The doors may comprise other materials as well. A special case of a door for user interface appearing only on the main module 100 or 300 has two configurations:
- PIN pad only door 105 on main module 100
- PIN pad and display door 301 on main module 300

On the main module 100 or 300, a cellular network antenna 506 is mounted on the roof 600. All the outer shell surfaces can be covered as desired, e.g., different color choices, advertisement areas etc.

### APM user interface

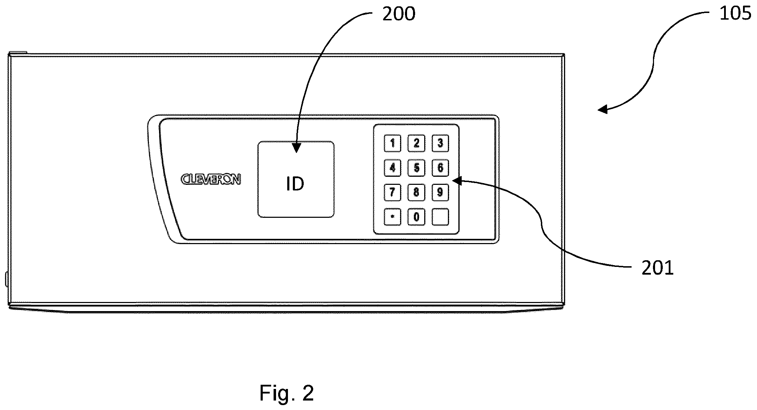

In some versions, the PIN pad door 105 is part of the main module 100 and the PIN pad door acts as a starting point for human to machine (APM) communication. Fig. 2 illustrates an example human-to-APM communication interface. With reference to Fig. 2, it has an identification code plate 200. The identification code, for example a QR code, carries a specific ID value of the APM, used to identify the main module 100 through scanning operation by a mobile courier application. This app is used for parcel insertions. For the end user parcel retrieval functionality, the PIN pad door 105 has a numerical PIN pad 201 installed. By entering the correct numerical combination, the corresponding parcel slot covered with door 104 opens.

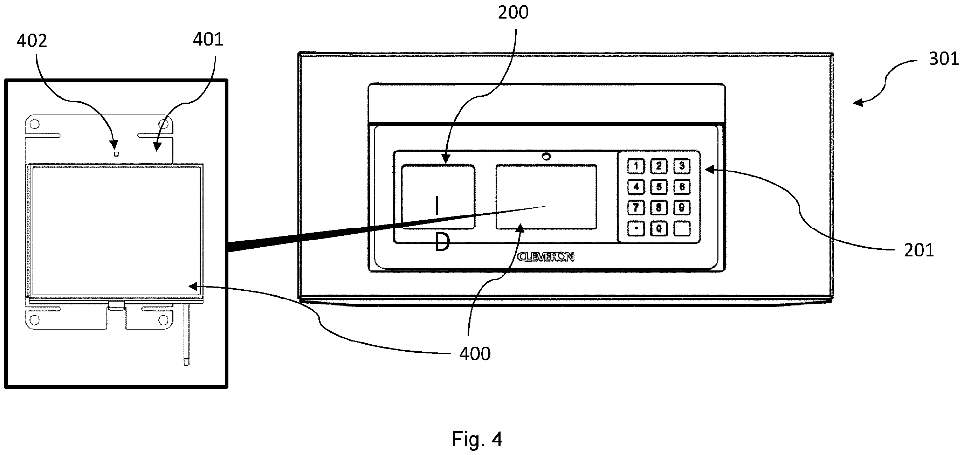

In some versions, the PIN pad and display door 301 is integrated into the main module 300 and the integrated PIN pad and display door acts as a starting point for human to machine (APM) communication. Fig. 4 illustrates an example human-to-APM communication interface. With reference to Fig. 4, the door has an identification code 200 with a unique ID, facilitating mobile courier application and parcel insertions. The addition of TFT display 400 offers an alternative way of parcel insertions by using a numerical PIN pad 201. The TFT display 400 interacts with the user by showing feedback messages. The PIN pad 201 can further be used for parcel retrieval by the end user.

### Display controller

In the PIN pad and display door 301 the display controller 401 is present. It is responsible for managing the operations of the TFT display 400. The reflective technology used in the TFT display 400 harnesses ambient irradiance, ensuring visibility during the daytime while minimizing energy use. At night, the TFT display 400 is equipped with a front light, which is regulated by an ambient light sensor 402. The display controller 401 communicates with the device board 500 via I2C.

### Device board

Both the main module 100 or 300 and the extra module 101 have a device board with a specific configuration based on the unit type and the number of parcel insertion slots covered by doors 104 per module. The device board forms a ceiling panel in the upper right parcel compartment for each module type.

### Device board inside the main module

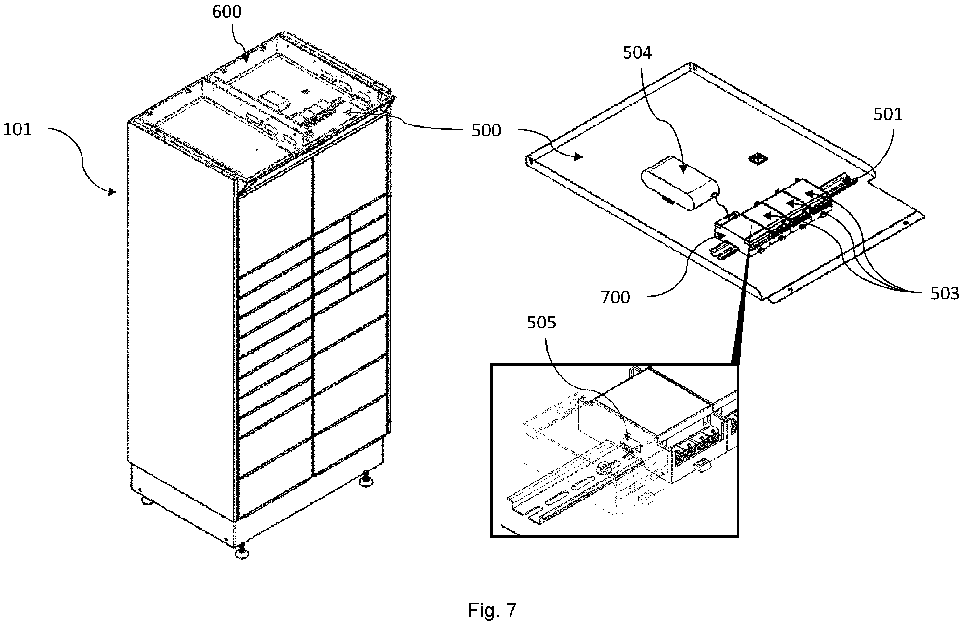

Referring now to Figs. 5, 6 and 7, APMs including device boards are shown. Fig. 5 illustrates the main module 100 with PIN pad only door 105 and its device board 500. Fig. 6 illustrates the main module 300 with PIN pad + display door 301 and its device board 500. Fig. 7 illustrates the extra module 101 and its device board 500. In the main modules 100 or 300, the device board 500 has the main controller (MC) 502 attached on DIN rail 501. The MC is responsible for the controlling operations of the main module and receives PIN pad 201 data via I²C bus. Inside the MC 502 two submodules are included:
- Low-Power Wide-Area (LPWA) module connects the APM via LTE-M or NB-IoT network to the server. This server-APM connection is established after a predefined time interval. Information e.g., APM slot status (filled/empty/disabled/opened) is exchanged. To improve the connection quality, LPWA module (MC 502) has an external cellular network antenna 506 with a coaxial cable.
- Bluetooth Low Energy (BLE) module connects the main controller 502 inside the main module 100 or 300 to the sub-controller (SC) 700 inside the extra module 101. In a preferred embodiment three sub-controllers 700 are enabled to connect to a single main controller 502, meaning each main module 100 or 300 can communicate with three extra modules 101.It is to be understood that more than three sub-controllers may be enabled to connect to a single main controller. In addition, the BLE module establishes the connection between the MC 502 and the mobile courier application.

The MC 502 controls an extension bus (the bus) 505. The extension bus 505 carries battery power, logic power, I²C signals and addressing signals for additional functional modules attached to the DIN rail 501. The power supplies for the bus 505 can be enabled and disabled by the MC 502. The power supplies for the bus 505 are protected against overcurrent by the MC 502. Functional modules attached to the bus are controlled by the MC 502 via I²C. The MC 502 places an initial address value on the bus.

Functional modules 503 attached to the bus 505 determine their I²C address by a combination of their function and the address received on the bus 505. Functional modules pass the power and I²C on to the next functional module unmodified, enabling daisy-chaining. Addressing information received on the bus 505 is passed on modified as follows: If it is possible to connect multiple of one type of functional modules to the bus 505, then each module increments the address on the bus 505 before passing it on to the next functional module; If only one type of functional module can be connected to the bus, then the functional module ignores the address on the bus and passes the initial address value on to the next functional module. Functional modules may be mounted on the DIN rail or attached to the extension bus via cable (not pictured) and mounted separately.

I/O (input/output) modules 503 are electrical interfaces for opening the door locks and reading the door state from the door locks. I/O modules 503 are functional modules as described in the previous paragraph and are thus controlled by the MC 502 via the extension bus 505.

In a preferred embodiment, each I/O module 503 has eight lock output ports, meaning the number of I/O modules inside the APM unit is defined by a ceiling function of parcel insertion slot covered with door 104 count divided by eight.

The main module 100 is powered by at least one, and preferably by three non-rechargeable primary batteries 504 dimensioned to last the lifetime of the APM. For the main module 300, the number of batteries is higher than in the main module 100, preferably five, due greater energy consumption caused by the TFT display 400 and display controller 401. Each battery is separately connected to the MC 502.

### Device board inside the extra module

In the extra module 101 the device board has on DIN rail 501 attached the sub-controller (SC) 700. The SC 700 carries out the controlling operations of the extra module. Inside the SC 700 a BLE module is included, enabling a wireless BLE connection between the SC 700 inside the extra module 101 and MC 502 inside the main module 100. The SC 700 controls an extension bus 505 identical in function to the one controlled by the MC 502. The I/O modules 503 attached to the SC 700 extension bus 505 are identical to the ones attached to the MC 502.

The extra module 101 is powered by a single non-rechargeable primary battery 504 connected to the SC 700. The battery 504 in extra module 101 is dimensioned to power the module for the lifetime of the APM.

### Parcel insertion flow

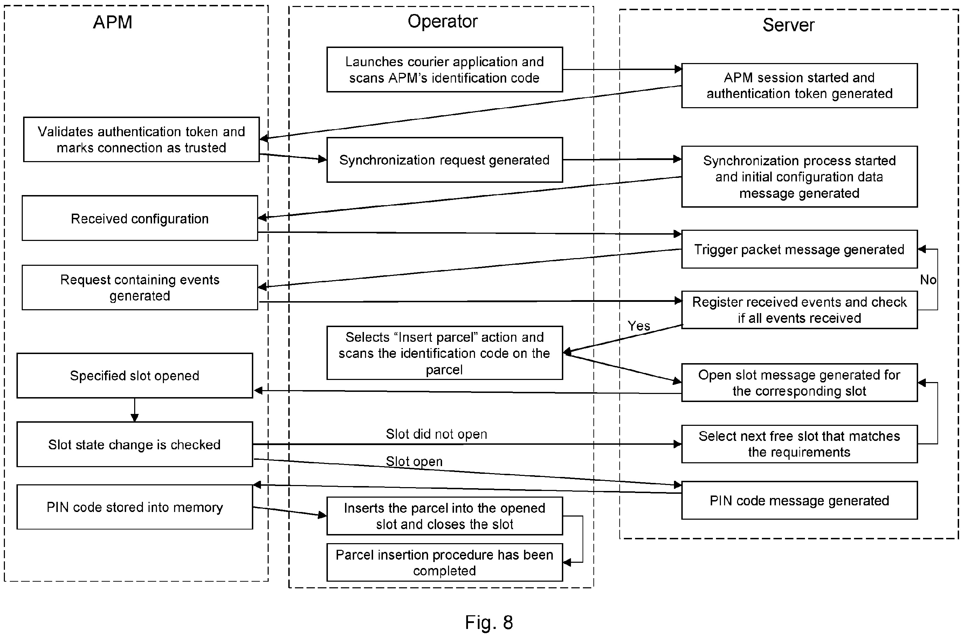

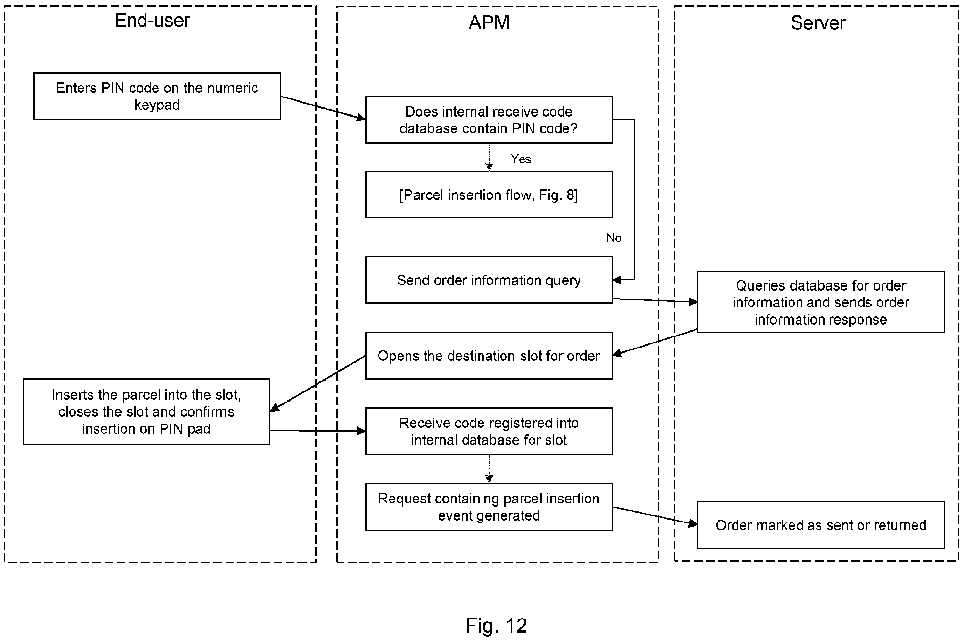

Referring to figs 8 and 12, two example parcel insertion flows could be distinguished:
- Parcel insertion flow over mobile network. The transfer of order information between the APM and server occurs over mobile network (LTE-M, NB-IoT). This flow is possible with the PIN pad and display main module 300 (Fig. 6), optionally paired with extra module(s) 101.
- Parcel insertion flow over courier mobile application. The application acts as a link between the server and the APM MC 502. This flow is possible with both the PIN pad and display main module 300 (Fig. 6) and the PIN pad only main module 100 (Fig 1), optionally paired with extra module(s) 101.

### Parcel insertion flow over mobile network

Referring now to Fig. 12, example parcel insertion operations are shown.
1. End-user enters PIN code using the numeric PIN pad 201 mounted on the PIN pad and display door 301,
2. APM MC 502 creates a Constrained Application Protocol (CoAP) request containing an order query with the entered PIN code and transmits the request to the server over the LTE-M/NB-IoT network,
3. Server receives the CoAP request and searches for the order corresponding to the received order query,
4. Server responds to the APM with an order query response containing the destination slot volume or destination module and slot information and the receive PIN code,
5. APM opens an unoccupied parcel insertion slot with the corresponding volume and queues a slot opening event into the APM event queue,
6. End-user inserts the parcel in the slot and closes the slot,
7. APM MC 502 prompts for the end-user to confirm that the parcel has been successfully inserted on the TFT display 400,
8. If the end-user does not confirm a successful insertion APM MC 502 opens the next unoccupied parcel insertion slot with a corresponding volume and prompts for end-user confirmation again,
9. End-user confirms a successful insertion,
10. APM MC 502 queues a slot closing event and a parcel insertion event into the APM event queue and registers the receive PIN code to open the confirmed slot,

### Parcel insertion flow over courier application

Referring now to Fig. 8, example parcel insertion operations are shown. The parcel insertion flow goes as follows:
1. Operator launches the courier application on their mobile device,
2. Operator presses the "Identification code" button in the courier application,
3. Operator points the mobile device's camera towards the identification code 200 on the main module 100 or 300,
4. Courier application finds and connects to the APM MC 502 over Bluetooth Low Energy,
5. Courier application requests an APM session from the server,
6. Server creates an APM session,
7. Server responds to the courier application with an authentication token,
8. Courier application sends the authentication token to the APM MC 502,
9. APM MC 502, validates the authentication token and marks the mobile device connection as trusted,
10. Courier application requests APM synchronization from the server,
11. Server responds to the courier application with initial configuration data and a communications trigger packet,
12. Courier application writes the initial configuration data and the communications trigger packet to the APM MC 502,
13. APM MC 502 updates its configuration according to the provided configuration data and creates and sends a CoAP request containing APM events to the courier application,
14. Courier application forwards the CoAP request to the server,
15. Server registers each APM event contained in the CoAP request and sends communications trigger packets to the courier application until all of the events have been received,
16. Server responds to the courier application to indicate that the synchronization has been completed,
17. Operator presses the "Insert parcel" button in the courier application,
18. Operator points the mobile device's camera towards the identification code on the parcel,
19. Courier application requests parcel insertion procedure (OPERIN) for the scanned code from the server,
20. Server responds to the courier application with a slot open packet,
21. Courier application sends the slot open packet to the APM MC 502,
22. If the parcel is contained in an extra module 101 slot APM MC 502 writes a slot open command to the SC 700 over Bluetooth,
23. APM controller 502/700 opens the corresponding parcel insert slot covered with door 104 via I/O modules 503,
24. I/O module 503 detects the parcel insert slot covered with door 104 opening and notifies the APM controller 502/700,
25. APM controller creates a slot opened event,
26. If the parcel was contained in an extra module 101 slot APM SC 700 writes a slot status change notification to the MC 502 over Bluetooth,
27. APM MC 502 creates and sends a CoAP packet containing the slot opened event to the courier application,
28. Courier application forwards the CoAP request to the server,
29. Server registers the slot open event, creates a PIN code assignment packet and sends the slot opening notification and PIN code assignment packet the courier application,
30. Courier application instructs the operator to enter the parcel into the opened slot and then close the slot,
31. Operator inserts the parcel into the opened slot and closes the parcel insert slot door 104,
32. I/O module 503 detects the parcel insert slot door 104 closing and notifies the APM controller 502/700,
33. APM controller 502/700 creates a slot closed event,
34. If the parcel was contained in a submodule 101 slot APM SC 700 writes a slot status change notification to the MC 502 over Bluetooth,
35. APM MC 502 creates and sends a CoAP packet containing the slot closing event to the courier application,
36. Courier application forwards the CoAP request to the server,
37. Server registers the slot open closed, marks the orders as being inserted into the APM and sends the slot closing notification to the courier application,
38. Courier application writes the PIN code assignment packet to the APM MC 502,
39. APM MC 502 stores the received PIN code into memory,
40. Courier application notifies the operator of a successful parcel entry,
41. Operator presses the "Disconnect" button in the courier application,
42. Courier application requests the APM session to be closed,
43. Server closes the APM session and publishes inserted parcel notifications to other services,
44. Courier application disconnects from the APM MC 502 over Bluetooth.

### Parcel retrieval flow

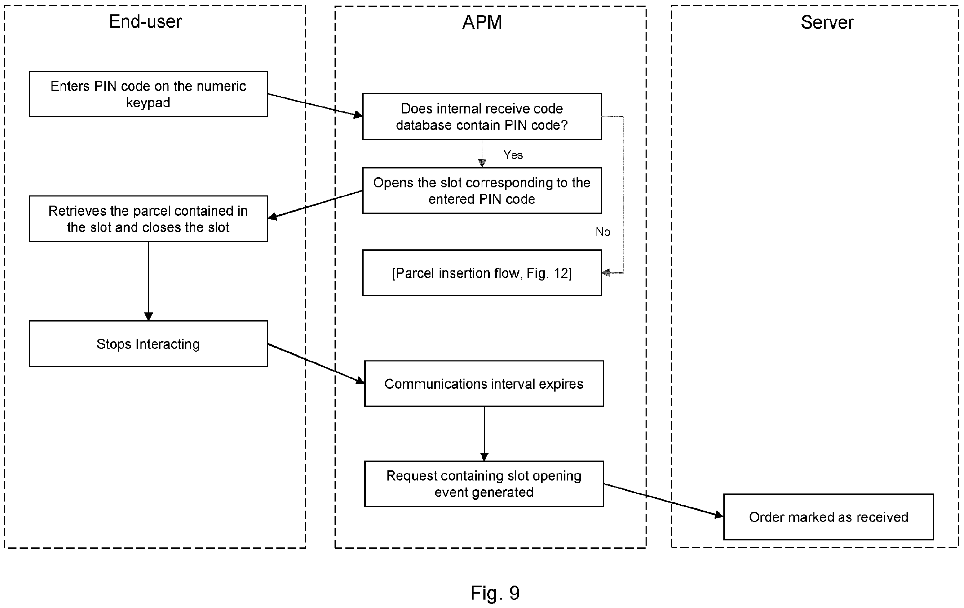

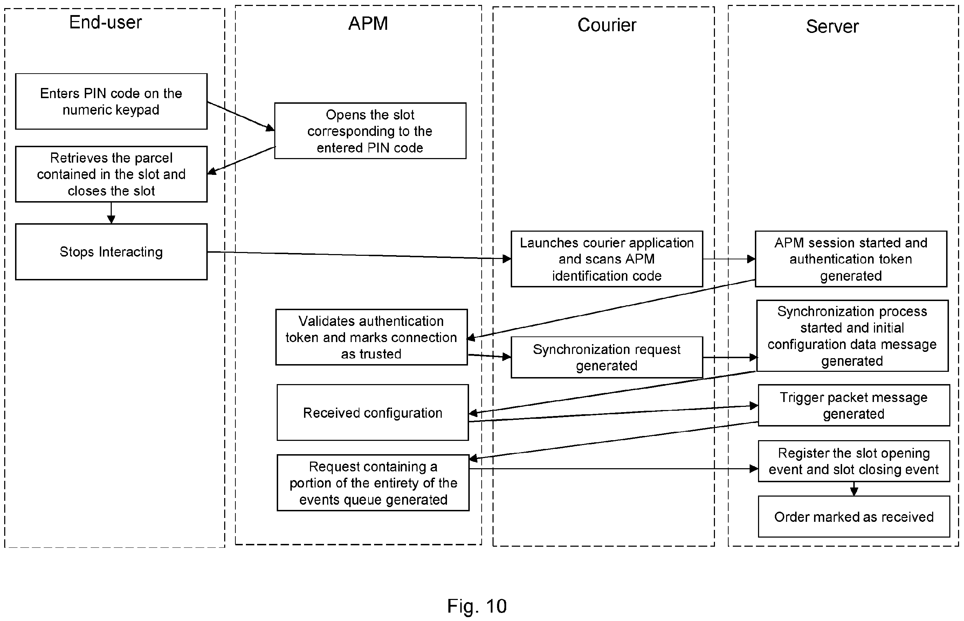

Referring now to Figs. 9 and 10, example parcel retrieval operations are shown. With parcel retrievals two flows could be distinguished:
- Parcel retrieval flow over mobile network. The slot status synchronization between the APM and server occurs over mobile network (LTE-M, NB-IoT).
- Parcel retrieval flow over courier mobile application. The application acts as a link between the server and the APM MC 502.

### Parcel retrieval flow over mobile network

Referring now to Fig. 9, example parcel retrieval operations over a mobile network are shown. The parcel retrieval flow goes as follows:
1. End-user enters PIN code using the numeric PIN pad 201 mounted on the main module 100,
2. APM opens the corresponding parcel insert slot door 104 and queues a slot opening event into the APM event queue,
3. End-user retrieves the parcel contained in the slot and closes the slot,
4. APM MC 502 queues a slot closing event into the APM event queue.
5. The end user stops interaction with the APM.
6. APM MC 502 awaits until the next communications interval expires,
7. APM MC 502 creates a CoAP request containing the slot opening event and slot closing event and transmits it to the server over the LTE-M/NB-IoT network,
8. Server receives the CoAP request and registers the slot opening event and slot closing event,
9. Server locates the order associated with the slot location contained in the slot opening event and marks it as received,
10. Server publishes received parcel notifications to other services.

### Parcel retrieval flow over courier application

Referring now to Fig. 10, example parcel retrieval operations over a courier application are shown. The parcel retrieval flow goes as follows:
1. End-user enters PIN code using the numeric PIN pad 201 mounted on the APM,
2. APM opens the corresponding parcel insert slot door 104 and queues a slot opening event into the APM event queue,
3. End-user retrieves the parcel contained in the slot and closes the slot,
4. APM MC 502 queues a slot closing event into the APM event queue,
5. End user stops interacting with the APM.
6. Operator arrives at the APM site,
7. Operator launches the courier application on their mobile device,
8. Operator presses the "Identification code" button in the courier application,
9. Operator points the mobile device's camera towards the identification code 200 on the APM,
10. Courier application finds and connects to the APM MC 502 over Bluetooth Low Energy,
11. Courier application requests an APM session from the server,
12. Server creates an APM session,
13. Server responds to the courier application with an authentication token,
14. Courier application sends the authentication token to the APM MC 502,
15. APM MC 502 validates the authentication token and marks the mobile device connection as trusted,
16. Courier application requests APM synchronization from the server,
17. Server responds to the courier application with initial configuration data and a communications trigger packet,
18. Courier application writes the initial configuration data and the communications trigger packet to the APM MC 502,
19. APM MC 502 updates its configuration according to the provided configuration data and creates and sends a CoAP request containing APM events to the courier application,
20. Courier application forwards the CoAP request to the server,
21. Server registers each APM event contained in the CoAP request and sends communications trigger packets to the courier application until all of the events have been received,
22. Server registers a receive action for each slot opening event received,
23. Server publishes received parcel notifications to other services,
24. Server responds to the courier application to indicate that the synchronization has been completed.

### Special cases

### Sub-controller 700 crypto key change procedure

1. Server generates a unique key and a key change packet,
2. Key change packet is sent to the APM MC 502 over LTE-M/NB-IoT or courier app,
3. APM MC 502 parses the key change packet,
4. APM MC 502 generates an APM key change packet,
5. APM MC 502 sends the new APM key change packet to the APM SC 700 over BLE,
6. APM SC 700 stores the key into the next available key slot,
7. APM SC 700 generates an APM key change success notification,
8. APM SC 700 sends the APM key change success notification to the MC,
9. APM MC 502 stores the new key into the main controller flash memory,
10. APM MC 502 queues a successful key change event into the APM event queue,
11. APM MC 502 communications interval expires, or the courier application performs the event synchronization procedure,
12. APM MC 502 generates a CoAP request containing the successful key change event,
13. Server receives and registers the successful key change event.

### Example Computing Device

It should be appreciated that the logical operations described herein with respect to the various figures may be implemented (1) as a sequence of computer implemented acts or program modules (i.e., software) running on a computing device (e.g., the computing device described in Fig. 11), (2) as interconnected machine logic circuits or circuit modules (i.e., hardware) within the computing device and/or (3) a combination of software and hardware of the computing device. Thus, the logical operations discussed herein are not limited to any specific combination of hardware and software. The implementation is a matter of choice dependent on the performance and other requirements of the computing device. Accordingly, the logical operations described herein are referred to variously as operations, structural devices, acts, or modules. These operations, structural devices, acts and modules may be implemented in software, in firmware, in special purpose digital logic, and any combination thereof. It should also be appreciated that more or fewer operations may be performed than shown in the figures and described herein. These operations may also be performed in a different order than those described herein.

Referring to Fig. 11, an example computing device 800 upon which the methods described herein may be implemented is illustrated. It should be understood that the example computing device 800 is only one example of a suitable computing environment upon which the methods described herein may be implemented. Optionally, the computing device 800 can be a well-known computing system including, but not limited to, personal computers, servers, handheld or laptop devices, multiprocessor systems, microprocessor-based systems, network personal computers (PCs), minicomputers, mainframe computers, embedded systems, and/or distributed computing environments including a plurality of any of the above systems or devices. Distributed computing environments enable remote computing devices, which are connected to a communication network or other data transmission medium, to perform various tasks. In the distributed computing environment, the program modules, applications, and other data may be stored on local and/or remote computer storage media.

In its most basic configuration, computing device 800 typically includes at least one processing unit 806 and system memory 804. Depending on the exact configuration and type of computing device, system memory 804 may be volatile (such as random-access memory (RAM), non-volatile (such as read-only memory (ROM), flash memory, etc.), or some combination of the two. This most basic configuration is illustrated in Fig. 8 by box 802. The processing unit 806 may be a standard programmable processor that performs arithmetic and logic operations necessary for operation of the computing device 800. The computing device 800 may also include a bus or other communication mechanism for communicating information among various components of the computing device 800.

Computing device 800 may have additional features/functionality. For example, computing device 800 may include additional storage such as removable storage 808 and non-removable storage 810 including, but not limited to, magnetic or optical disks or tapes. Computing device 800 may also contain network connection(s) 816 that allow the device to communicate with other devices. Computing device 800 may also have input device(s) 814 such as a keyboard, mouse, touch screen, etc. Output device(s) 812 such as a display, speakers, printer, etc. may also be included. The additional devices may be connected to the bus in order to facilitate communication of data among the components of the computing device 800. All these devices are well known in the art and need not be discussed at length here.

The processing unit 806 may be configured to execute program code encoded in tangible, computer-readable media. Tangible, computer-readable media refers to any media that is capable of providing data that causes the computing device 800 (i.e., a machine) to operate in a particular fashion. Various computer-readable media may be utilized to provide instructions to the processing unit 806 for execution. Example tangible, computer-readable media may include, but is not limited to, volatile media, non-volatile media, removable media and non-removable media implemented in any method or technology for storage of information such as computer readable instructions, data structures, program modules or other data. System memory 804, removable storage 808, and non-removable storage 810 are all examples of tangible, computer storage media. Example tangible, computer-readable recording media include, but are not limited to, an integrated circuit (e.g., field-programmable gate array or application-specific IC), a hard disk, an optical disk, a magneto-optical disk, a floppy disk, a magnetic tape, a holographic storage medium, a solid-state device, RAM, ROM, electrically erasable program read-only memory (EEPROM), flash memory or other memory technology, CD-ROM, digital versatile disks (DVD) or other optical storage, magnetic cassettes, magnetic tape, magnetic disk storage or other magnetic storage devices.

In an example implementation, the processing unit 806 may execute program code stored in the system memory 804. For example, the bus may carry data to the system memory 804, from which the processing unit 806 receives and executes instructions. The data received by system memory 804 may optionally be stored on removable storage 808 or the non-removable storage 810 before or after execution by the processing unit 806.

It should be understood that the various techniques described herein may be implemented in connection with hardware or software or, where appropriate, with a combination thereof. Thus, the methods and apparatuses of the presently disclosed subject matter, or certain aspects or portions thereof, may take the form of program code (i.e., instructions) embodied in tangible media, such as floppy diskettes, CD-ROMs, hard drives, or any other machine-readable storage medium wherein, when the program code is loaded into and executed by a machine, such as a computing device, the machine becomes an apparatus for practicing the presently disclosed subject matter. In the case of program code execution on programmable computers, the computing device generally includes a processor, a storage medium readable by the processor (including volatile and non-volatile memory and/or storage elements), at least one input device, and at least one output device. One or more programs may implement or utilize the processes described in connection with the presently disclosed subject matter, e.g., through the use of an application programming interface (API), reusable controls, or the like. Such programs may be implemented in a high-level procedural or object-oriented programming language to communicate with a computer system. However, the program(s) can be implemented in assembly or machine language, if desired. In any case, the language may be a compiled or interpreted language and it may be combined with hardware implementations.

### List of Elements

| | |
|---|---|
| PIN pad only main module | 100 |
| extra module | 101 |
| locker body | 102 |
| base frame | 103 |
| parcel insert slot covered with door | 104 |
| PIN pad door | 105 |
| Leveling feet | 106 |
| Identification code | 200 |
| numeric PIN pad | 201 |
| PIN pad + display main module | 300 |
| PIN pad + display door | 301 |
| TFT display | 400 |
| display controller | 401 |
| ambient light sensor | 402 |
| device board | 500 |
| DIN rail | 501 |
| APM main controller (MC) | 502 |
| Input/output modules | 503 |
| non-rechargeable primary batteries | 504 |
| bus | 505 |
| cellular network antenna | 506 |
| partially opened roof | 600 |
| APM sub-controller (SC) | 700 |
| computing device | 800 |
| basic computing configuration | 802 |
| system memory | 804 |
| processing unit | 806 |
| removable storage | 808 |
| non-removable storage | 810 |
| output device(s) | 812 |
| input device(s) | 814 |
| network connection(s) | 816 |

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An automated parcel machine (APM) module (100, 300, 101) comprising:
a body comprising a plurality of parcel insertion slots; covered with doors (104) and
a device board (500) for controlling operations of the APM module, the device board comprising a controller (502, 700) comprising:
at least one processor,
at least one memory operably coupled to the at least one processor,
a low-power wide-area module configured for communication with a server over a first communication link, and
a low-power personal-area module configured for communication with a second APM module over a second communication link.

2. The APM module of claim 1, wherein the first communication link comprises a cellular network.

3. The APM module of claim 1 or 2, wherein the controller is configured to communicate with the server over the first communication link using a narrowband internet of things (NB-IoT) protocol or Long Term Evolution Machine Type Communication (LTE-M) standard.

4. The APM module of any one of claims 1-3, wherein the second communication link is a Bluetooth low-energy (BLE) link.

5. The APM module of any one of claims 1-4, wherein the controller is configured to establish a connection to the server over the first communication link.

6. The APM module of claim 5, wherein the controller is configured to transmit a status synchronization signal to the server over the first communication link.

7. The APM module of any one of claims 1-6, wherein the controller is configured to establish a connection to the second APM module or a mobile courier application over the second communication link.

8. The APM module of any one of claims 1-7, wherein the device board further comprises at least one battery.

9. The APM module of any one of claims 1-7, wherein the device board further comprises a plurality of batteries.

10. The APM module of any one of claims 1-9, further comprising an antenna operably coupled to the low-power wide-area module.

11. The APM module of any one of claims 1-10, further comprising a PIN pad (201) or a PIN pad (201) coupled with a TFT display (400) .

12. A system comprising:
a first automated parcel machine (APM) module (100, 300), which is the APM module of any of claims 1-11; and
a second APM module (101), wherein the second APM module comprises:
a second body comprising a second plurality of parcel insertion slots covered with doors (104), and
a second device board for controlling operations of the second APM module, the second device board comprising a second controller comprising:
at least one second processor;
at least one second memory operably coupled to the at least one second processor; and
a second low-power personal-area module configured for communication with the first APM module over the second communication link.

13. The system of claim 12, further comprising a third APM module comprising:
a third body comprising a third plurality of parcel insertion slots covered with doors (104), and
a third device board for controlling operations of the third APM module, the third device board comprising a third controller comprising:
at least one third processor;
at least one third memory operably coupled to the at least one third processor; and
a third low-power personal-area module configured for communication with the first APM module over the second communication link.
